# DEMANDE DE BREVET EUROPEEN

(11) **EP 1 724 475 A1**
(43) Date de publication de la demande: **22.11.2006**
(21) Numéro de dépôt: 06300475.8
(22) Date de dépôt: 16.05.2006
(51) Int. Cl.: F16C 3/14, F01M 9/06

(54) **Vilebrequin et moteur comportant un tel vilebrequin**

(30) Priorité: 17.05.2005 FR 0551265
(71) Demandeur: PEUGEOT CITROËN AUTOMOBILES S.A., 78140 Velizy Villacoublay (FR)
(72) Inventeur: Noiret, Christian, 78230, LE PECQ (FR)
(74) Mandataire: Ménès, Catherine

(57) **Abrégé**

L'invention concerne un vilebrequin (1) destiné à évoluer dans un carter inférieur d'un moteur, le carter formant bassin de rétension d'un fluide, le vilebrequin comportant des premières et secondes surfaces (4,5) de révolution destinées à coopérer avec des moyens réducteur de frottement, tels des coussinets ou des roulements, le vilebrequin (1) étant de la sorte relié à au moins une bielle de piston et un palier par l'intermédiaire desdits moyens réducteur de frottement.

Le vilebrequin de l'invention se caractérise en ce qu'il comprend au moins un passage confondu à l'axe (B-B) de rotation du vilebrequin (1) et au moins une rampe (3a,3b) de distribution orientée sensiblement radialement par rapport à l'axe (B-B), la rampe (3a,3b) radiale comprenant au moins une entrée ouverte sur le passage (2) axial et au moins une sortie débouchant au niveau des moyens réducteur de frottement.

L'invention concerne également un moteur muni d'un tel vilebrequin.

## Description

L'invention se rapporte à un vilebrequin et à un moteur à combustion interne muni d'un tel vilebrequin.

L'invention concerne plus particulièrement un vilebrequin et un moteur à combustion interne comportant un tel vilebrequin qui évolue dans un carter inférieur formant bassin de rétension d'un fluide, le vilebrequin étant relié à au moins une bielle de piston et un palier par l'intermédiaire de moyens réducteur de frottement.

Le fonctionnement des moteurs à combustion interne engendre une mise en mouvement de nombreuses pièces mécaniques. La réduction de la consommation d'un moteur passe par une recherche continue sur la baisse des pertes par frottement. Pour cela, il est habituellement connu de lubrifier des moyens réducteur de frottement, tels les coussinets disposés soit entre les tourillons du vilebrequin et les paliers du carter, soit entre les manetons du vilebrequin et les bielles de piston. L'opération de lubrification est mise en oeuvre par des systèmes de lubrification particuliers qui acheminent par exemple de manière forcée, un lubrifiant au niveau des coussinets. Cependant, de tels systèmes restent coûteux et complexe à mettre en oeuvre.

Pour s'affranchir des pertes par frottement, il est aussi connu de remplacer les coussinets par des roulements, lesquels présentent un coefficient de frottement plus faible. Une telle utilisation a pour avantage d'une part de réduire significativement les frottements au niveau du palier, d'autre part de s'affranchir d'une lubrification particulière qui nécessite notamment un débit d'huile qui est en l'espèce procuré par une pompe dédiée.

La demanderesse a cependant constaté qu'en terme de longévité de fonctionnement, les roulements ne sont pas conformes aux attentes. En effet, il a été constaté que de tels roulements, qui sont par ailleurs de nature à s'autolubrifier en présence d'un environnement chargé en huile, présentent souvent un déficit de lubrification dans leur environnement, ce qui a pour conséquence de les user prématurément.

Ce manque de lubrification semble être en partie lié à la présence de butées latérales présentes sur le vilebrequin au niveau des manetons et tourillons. Ces butées sont destinées à limiter le débattement axial du vilebrequin qui est provoqué en partie par les efforts axiaux donnés par des éléments de l'embrayage au vilebrequin.

La lubrification des roulements semble également contrainte par la disposition des bras du vilebrequin au proche, voire à l'aplomb, des paliers, recouvrant parfois même partiellement le roulement. Ainsi, le confinement des roulements dans un tel environnement génère de réelles difficultées pour les refroidir ou les lubrifier.

La présente invention a trait à un vilebrequin destiné à évoluer dans un carter inférieur d'un moteur, le carter formant bassin de rétension d'un fluide, le vilebrequin comportant des premières et secondes surfaces de révolution destinées à coopérer avec des moyens réducteur de frottement, tels des coussinets ou des roulements, le vilebrequin étant de la sorte relié à au moins une bielle de piston et un palier par l'intermédiaire desdits moyens réducteur de frottement.

Un but de la présente invention est de pallier tout ou partie des inconvénients de l'art antérieur relevés ci-dessus.

A cette fin, le vilebrequin selon l'invention, par ailleurs conforme à la définition générique qu'en donne le préambule ci-dessus, est essentiellement caractérisé en ce qu'il comprend au moins un passage apte à collecter le fluide, et au moins une rampe destinée à distribuer le fluide, le ou les passages et/ou rampes étant conformés de façon que la distribution du fluide est obtenue par une force centrifuge générée lors de la mise en rotation du vilebrequin, le fluide étant destiné à lubrifier et refroidir lesdits moyens réducteur de frottement.

Par ailleurs, le vilebrequin de l'invention peut comporter l'une ou plusieurs des caractéristiques suivantes :
- il comprend au moins un passage parallèle et confondu à un axe de rotation du vilebrequin et au moins une rampe de distribution orientée sensiblement radialement par rapport à l'axe de rotation du vilebrequin, et en ce que ladite rampe radiale comprend au moins une entrée ouverte sur ledit passage axial et au moins une sortie débouchant au niveau desdits moyens réducteur de frottement,
- les premières surfaces de révolution du vilebrequin coopèrent avec au moins une sortie des premières rampes de distribution du fluide de refroidissement et de lubrification,
- les secondes surfaces de révolution du vilebrequin coopèrent avec au moins une sortie d'une seconde rampe de distribution du fluide de refroidissement et de lubrification,
- la première rampe de distribution est distincte en tout ou partie de la seconde rampe de distribution.

L'invention concerne également un moteur à combustion interne comportant notamment un bloc moteur, un carter inférieur formant un bassin de rétension d'un fluide destiné à la lubrification et au refroidissement d'organes mécaniques en mouvement, et un vilebrequin destiné à évoluer dans le carter inférieur, le vilebrequin étant apte à pivoter sur un palier et/ou une bielle de piston, le moteur comportant un vilebrequin conforme aux caractéristiques précédemment citées.

Selon l'invention, le moteur peut comporter par ailleurs l'une ou plusieurs des caractéristiques suivantes :
- lesdits moyens réducteur de frottement comportent au moins un roulement,
- le roulement est disposé au niveau des premières et/ou secondes surfaces de révolution du vilebrequin, le roulement étant interposé soit entre une première surface du vilebrequin et un palier, soit entre une seconde surface du vilebrequin et une bielle de piston,
- le vilebrequin comporte au moins deux premières surfaces coopérant avec des paliers et au moins une seconde surface coopérant avec une bielle de piston.

D'autres particularités et avantages apparaîtront à la lecture de la description ci-après faite en référence aux figures dans lesquelles :
- la figure 1 représente une vue en coupe longitudinale d'une partie d'un vilebrequin selon l'invention,
- la figure 2 représente une vue en coupe transversale selon A-A de la figure 1.

Les vilebrequins 1 des moteurs à combustion interne comprennent traditionnellement des surfaces de révolution 4 et 5 coopérant avec des moyens réducteur de frottement, tels que des coussinets ou des roulements. Ces surfaces 4 et 5 cylindriques sont communément appelées tourillon 4 ou maneton 5 selon qu'elles permettent une rotation soit du vilebrequin sur le bloc moteur, soit d'une bielle sur le vilebrequin.

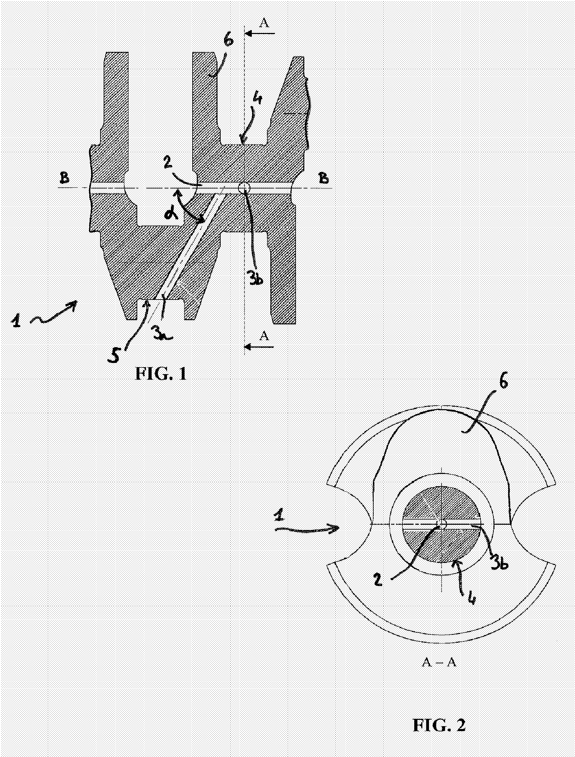

Selon l'invention, le vilebrequin 1 illustré en figure 1 comprend notamment au moins un passage 2 permettant de collecter le fluide présent dans une chambre de lubrification non représentée, délimitée par le carter inférieur et le bloc moteur. La collecte du fluide contenu dans la chambre est en partie obtenue par le biais d'un effet Venturi provoqué par la mise en rotation du vilebrequin 1.

Le vilebrequin 1 comprend également au moins une rampe 3 destinée à la distribution du fluide collecté. Pour cela, la rampe se compose d'au moins une voie de circulation du fluide entre le passage 2 de collecte et la surface 4 ou 5 cylindrique sur laquelle est agencé un moyen réducteur de frottement non représenté. La rampe est délimitée par la présence d'au moins une entrée et une sortie située à ses extrémités. Selon la direction de l'écoulement du fluide au travers de la rampe 3 de distribution, l'entrée débouche de préférence au niveau du passage 2, tandis que la sortie débouche au niveau des manetons ou des tourillons, lesquels supportent des moyens réducteur de frottement.

Le vilebrequin 1, dont une partie est donnée en figure 1, comporte à titre d'exemple deux rampes 3a et 3b de distribution destinées à alimenter respectivement le tourillon 4 et le maneton 5. Ainsi, le passage 2 de collecte ménagé sur l'axe B-B de rotation du vilebrequin traverse de part en part le vilebrequin. Le tourillon 4 possède une surface de révolution centrée sur un axe confondu à l'axe B-B de rotation du vilebrequin autour duquel s'étend le passage 2. Le maneton 5 possède quant à lui une surface de révolution centrée sur un axe distinct et parallèle à l'axe B-B de rotation du vilebrequin. Les surfaces de révolution du tourillon 4 et du maneton 5 comportent respectivement une sortie appartenant à la rampe 3a et à la rampe 3b.

Dans un mode préféré de réalisation, chaque passage 2 est sensiblement orienté axialement au vilebrequin, et communique avec des rampes 3a et 3b de distribution de sorte que le brouillard de fluide en suspension dans la chambre de lubrification est d'abord collecté par le passage 2, puis distribué aux moyens réducteur de frottement au tourillon 4 et au maneton 5 par les rampes 3a et 3b, lors d'une mise en rotation du vilebrequin.

La première rampe 3a de distribution du fluide au maneton 5 s'étend, comme illustrée sur les figures 1 et 2, de préférence selon une direction sensiblement oblique à l'axe B-B de rotation du vilebrequin. L'angle α entre l'axe B-B de rotation du vilebrequin et la direction de la première rampe est de préférence compris entre 45 et 85 degrés , de préférence 60 degrés.

La seconde rampe 3b de distribution du fluide au tourillon 4 est quant à elle sensiblement orientée radialement par rapport à l'axe B-B de rotation du vilebrequin, selon une direction sensiblement perpendiculaire à l'axe de rotation du vilebrequin.

De telles orientations ont pour avantage principal de permettre un écoulement du fluide dont le débit est provoqué notamment par la force centrifuge engendrée par la mise en rotation du vilebrequin.

De préférence, la rampe destinée à la distribution du fluide est de section cylindrique. Bien entendu, elle peut être conformée selon une section de géométrie différente. II en est de même pour le passage 2 destiné à la collecte du fluide, lequel est de préférence de section cylindrique et s'étend coaxialement à l'axe de rotation du vilebrequin comme l'illustre la figure 2

Le passage 2 est de forme sensiblement tubulaire et peut être obtenu, comme chaque rampe, par l'intermédiaire d'une opération de perçage du vilebrequin. Bien entendu, la réalisation du passage ou de la rampe peut être obtenue durant la fabrication du vilebrequin, par l'utilisation d'un noyau de forme sensiblement complémentaire au passage ou à la rampe, le noyau étant alors disposé dans le moule utilisé à la fabrication du vilebrequin.

Un tel vilebrequin est avantageusement utilisé dans les moteurs à combustion interne, et comprend au moins deux tourillons 4 et au moins un maneton 5. Par conséquent, le vilebrequin 1 comprend deux passages 2 de collecte du fluide qui coopèrent à la fois avec deux secondes rampes 3b qui débouchent vers les deux tourillons 4, et avec au moins une première rampe 3a qui débouche vers le maneton 5.

Bien entendu plusieurs sorties des permières et secondes rampes 3a et 3b de distribution peuvent déboucher vers chaque tourillon et maneton du vilebrequin.

Dans un mode préféré de réalisation d'un moteur à combustion interne comportant quatre cylindres, le vilebrequin comprend cinq tourillons, quatre manetons, cinq passages, quatre premières rampes 3a de distribution du fluide aux moyens réducteur de frottement disposés entre chaque bielle de piston et un maneton du vilebrequin, et cinq secondes rampes 3b de distribution du fluide aux moyens réducteur de frottement disposés entre chaque palier et un tourillon du vilebrequin.

Dans ce mode de réalisation, les moyens réducteur de frottement disposés au niveau des manetons peuvent être différents de ceux disposés au niveau des tourillons. Par exemple, des roulements peuvent être disposés au niveau des manetons, tandis que des coussinets sont disposés au niveau des tourillons.

L'utilisation d'un vilebrequin, tel que décrit précédemment, est remarquable en ce qu'elle permet de lubrifier et de refroidir suffisamment les roulements intercalés ente le vilebrequin et le palier du bloc moteur ou la bielle de piston. En effet, un tel vilebrequin assure avantageusement une lubrification et un refroidissement des roulements sans avoir recours à un dispositif complexe et dédié de mise en oeuvre, telle une pompe à huile destinée à forcer l'écoulement d'un fluide. Un tel vilebrequin a ainsi pour principal effet de lubrifier et de refroidir de façon naturelle les roulements agencés aux niveaux des tourillons et des manetons, par le biais de sa mise en rotation lors du fonctionnement du moteur.

## Revendications

1. Vilebrequin (1) destiné à évoluer dans un carter inférieur d'un moteur, le carter formant bassin de rétension d'un fluide, le vilebrequin comportant des premières et secondes surfaces (4, 5) de révolution destinées à coopérer avec des moyens réducteur de frottement, tels des coussinets ou des roulements, le vilebrequin (1) étant de la sorte relié à au moins une bielle de piston et un palier par l'intermédiaire desdits moyens réducteur de frottement, **caractérisé en ce qu'**il comprend au moins un passage parallèle et confondu à l'axe (B-B) de rotation du vilebrequin (1) et au moins une rampe (3a, 3b) de distribution orientée sensiblement radialement par rapport à l'axe (B-B), ladite rampe (3a, 3b) radiale comprenant au moins une entrée ouverte sur ledit passage (2) axial et au moins une sortie débouchant au niveau desdits moyens réducteur de frottement de sorte que la force centrifuge générée lors de la mise en rotation du vilebrequin conduit à la collecte et la distribution du fluide pour la lubrification et le refroidissement des moyens réducteur de frottement.

2. Vilebrequin selon la revendication 1, **caractérisé en ce que** les premières surfaces (5) de révolution du vilebrequin (1) coopèrent avec au moins une sortie d'une première rampe (3a) de distribution du fluide de refroidissement et de lubrification.

3. Vilebrequin selon la revendication 1 ou 2, **caractérisé en ce que** les secondes surfaces (4) de révolution du vilebrequin (1) coopèrent avec au moins une sortie d'une seconde rampe (3b) de distribution du fluide de refroidissement et de lubrification.

4. Vilebrequin selon les revendications 2 et 3, **caractérisé en ce que** la première rampe (3a) de distribution est distincte en tout ou partie de la seconde rampe (3b) de distribution.

5. Moteur à combustion interne comportant notamment un bloc moteur, un carter inférieur formant un bassin de rétention d'un fluide destiné à la lubrification et au refroidissement d'organes mécaniques en mouvement, et un vilebrequin destiné à évoluer dans le carter inférieur, le vilebrequin étant apte à pivoter sur un palier et/ou une bielle de piston, **caractérisé en ce que** le vilebrequin est conforme à l'une quelconque des revendications 1 à 4.

6. Moteur selon la revendication 5, **caractérisé en ce que** lesdits moyens réducteur de frottement comprennent au moins un roulement.

7. Moteur selon la revendication 6, **caractérisé en ce que** le roulement est disposé au niveau des premières et/ou secondes surfaces (4, 5) de révolution du vilebrequin, le roulement étant interposé soit entre une première surface (4) du vilebrequin et un palier, soit entre la seconde surface (5) du vilebrequin et une bielle de piston.

8. Moteur selon l'une quelconque des revendications 5 à 7, **caractérisé en ce que** le vilebrequin comporte au moins deux premières surfaces (4) coopérant avec des paliers et au moins une seconde surface (5) coopérant avec une bielle de piston.
